Europäisches Patentamt

(19) European Patent Office

Office européen des brevets

(11) EP 0 692 832 A1

(12) EUROPEAN PATENT APPLICATION

(43) Date of publication:
17.01.1996 Bulletin 1996/03

(51) Int. Cl.6: H01M 4/52, C01G 53/00

(21) Application number: 95110733.3

(22) Date of filing: 10.07.1995

(84) Designated Contracting States:
DE FR GB

(30) Priority: 11.07.1994 JP 158417/94

(71) Applicant: FURUKAWA DENCHI KABUSHIKI KAISHA
Yokohama-shi, Kanagawa-ken (JP)

(72) Inventors:
• Iwane, Noriyasu
c/o The Furukawa Electric Co. Ltd.
Tokyo (JP)
• Sawa, Haruo
c/o Iwakijigyosho
Furukawa Denchi K.K.
Iwaki-shi, Fukushima (JP)

(74) Representative: Modiano, Guido, Dr.-Ing. et al
D-80469 München (DE)

(54) A preparing method for a nickel hydroxide for a nickel electrode, a nickel electrode supporting the nickel hydroxide, and an alkaline secondary battery

(57) A nickel hydroxide for a nickel electrode, which is prepared by allowing alkali to react with zirconium salt of 0.01 to 0.14 mols for 1 mol of nickel salt, and removing unnecessary salt from resultant reaction product, contains zirconium of 0.1 to 10 wt%, and is capable of high-density filling of current collector. A nickel electrode using this nickel hydroxide causes little swell in charge/discharge operation, and an alkaline secondary battery incorporating the nickel electrode has good charge/discharge cycle characteristics.

FIG. 1

EP 0 692 832 A1

## Description

## BACKGROUND OF THE INVENTION

### Prior Art

Conventionally, a positive electrode of an alkaline secondary battery, in which nickel hydroxide functions as an active material, has been manufactured by repeating, a plurality of times, an operation in which a porous substrate preparing by sintering nickel powder onto a nickel-plated perforated steel plate is dipped in an aqueous solution of nickel salt such as an aqueous solution of nickel nitrate, and then dipped in an alkaline aqueous solution such as an aqueous solution of potassium hydroxide.

In this process, a reaction represented by, for example, the following formula:

$$Ni(NO_3)_2 + 2KOH \rightarrow Ni(OH)_2 + 2KNO_3$$

takes place, by which the aforementioned nickel hydroxide deposits at the void portion of the porous substrate in which nickel powder is sintered on the perforated steel plate. The positive electrode thus manufactured is usually called a sintered nickel electrode.

For this sintered nickel electrode, however, the packing density of the active material ($Ni(OH)_2$) is low because the volume of the void portion in the substrate is low as the whole. For this reason, the alkaline secondary battery incorporating the sintered nickel electrode as the positive electrode cannot satisfactorily meet a recent demand for high-capacity battery. Further, the production cost of the sintered nickel electrode is high because the aforementioned depositing and filling processes for nickel hydroxide are complicated.

Accordingly, for the positive electrode, a non-sintered nickel electrode has been developed, which is manufactured by directly filling a highly porous current collector of three-dimensional network such as nickel sponge with active material paste prepared so as to consist mainly of nickel hydroxide synthesized in advance.

Nickel hydroxide used as the active material for the aforementioned non-sintered nickel electrode is normally prepared as follows: First, nickel salt such as nickel sulfate or nickel nitrate is dissolved in water to prepare an aqueous solution of nickel salt having a predetermined concentration. An alkaline aqueous solution such as an aqueous solution of sodium hydroxide or an aqueous solution of potassium hydroxide is mixed with the aqueous solution of nickel salt to produce insoluble nickel hydroxide by neutralization. Then, the nickel hydroxide is filtered and rinsed to remove unnecessary by-product salt, and allowed to dry.

However, the nickel hydroxide produced by the above-described neutralization is in a gel state. For this reason, the filtering operation is very difficult to perform, and it is also difficult to clean and remove the by-product salt. Moreover, many voids are present in the nickel hydroxide obtained after drying, the bulk density thereof being low. Therefore, when the current collector is filled, the packing density of active material is low, so that it is sometimes difficult to obtain a high-capacity battery.

A high-density spherical nickel hydroxide has been proposed as nickel hydroxide which does not present the above problems. The proposed nickel hydroxide is synthesized by dissolving nickel salt in slightly alkaline aqueous solution of amine to stabilize nickel ion as amine complex, and by gradually dripping alkaline aqueous solution into the resultant solution while the whole solution is kept slightly alkaline.

The nickel hydroxide of this type, having no voids formed therein, has a high bulk density, and the filtering and cleaning properties thereof are excellent, so that this material is very useful for achieving high capacity of battery.

In the alkaline secondary battery incorporating a nickel electrode using the aforementioned high-density spherical nickel hydroxide as a positive electrode, however, the nickel electrode swells when the charge/discharge cycle is repeated.

As a result, the nickel electrode or the whole battery may sometimes be deformed. Also, the electrolyte may be absorbed by the swelled nickel electrode, so that the balance of electrolyte between the positive electrode, separator, and negative electrode is destroyed, or the case may be damaged, so that the electrolyte leaks from the damaged area, resulting in the decrease in cycle life characteristics of the battery.

To cope with these problems, a technique is proposed in which an ion of different metal such as Zn or Cd is solidly dissolved in high-density spherical nickel hydroxide (refer to Unexamined Japanese Patent Publication No. H2-30061).

For the nickel electrode in which nickel hydroxide prepared on the basis of the above-described prior art is used as an active material, it is certain that the swelling during the initial charge/discharge operation is restrained remarkably. On the other hand, however, the discharge capacity per unit weight of active material decreases significantly.

When the charge/discharge cycle is repeated, the nickel electrode still swells gradually, and the cycle life characteristics of battery, though being somewhat improved as compared with the nickel electrode using the ordinary high-density spherical nickel hydroxide, are not always sufficient as compared with the aforementioned sintered nickel electrode.

## OBJECTS AND SUMMARY OF THE INVENTION

An object of the present invention is to provide a nickel hydroxide for a nickel electrode, in which filtering and cleaning can be performed easily and reliably in preparing, and a preparing method for the same.

Another object of the present invention is to provide a nickel hydroxide for a nickel electrode, which is capable of high-density filling for a current collector because of high bulk density, and a preparing method for the same.

Still another object of the present invention is to provide a nickel electrode which is less prone to swell in charge/discharge cycle when being incorporated in an alkaline secondary battery.

A further object of the present invention is to provide an alkaline secondary battery having a high discharge capacity per unit weight of active material.

To achieve the above object, the present invention provides a nickel hydroxide for a nickel electrode, in which the nickel hydroxide contains 0.1 to 10 percent by weight of zirconium.

Also, the present invention provides a preparing method for a nickel hydroxide for a nickel electrode, comprising:

a step of allowing alkali of an appropriate amount to react with zirconium salt of 0.01 to 0.14 mols for 1 mol of nickel salt, and

a step of removing unnecessary salt from the resultant reaction product.

Further, the present invention provides a nickel electrode in which an active material paste consisting mainly of the nickel hydroxide is supported by a current collector, and an alkaline secondary battery in which the nickel electrode is incorporated as a positive electrode.

## BRIEF DESCRIPTION OF THE DRAWING

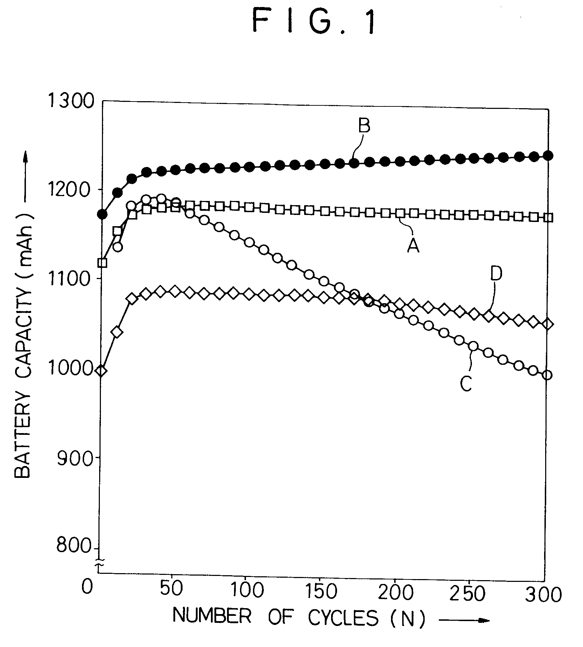

FIG. 1 is a graph showing the charge/discharge cycle characteristics of four types of nickel-hydrogen alkaline secondary batteries shown in Embodiment 16.

## DETAILED DESCRIPTION OF THE INVENTION

The nickel hydroxide of the present invention contains Zr. This Zr, like Zn which is an additional element described in the aforementioned Unexamined Japanese Patent Publication No. H2-30061, restrains the swelling of the nickel hydroxide during the charge/discharge operation.

In this case, for example, the solubility of $Zr^{4+}$ for alkaline aqueous solution of pH = 14 is $1 \times 10^{-3.2}$ to $1 \times 10^{-4.8}$g/liter. This value is far lower than the solubility of $Zn^{2+}$ for alkaline aqueous solution of the same pH = 14 ($1 \times 10^{-0.2}$ to $1 \times 10^{-1.7}$g/liter).

Therefore, when the charge/discharge cycle is performed by dipping the nickel electrode using the nickel hydroxide of the present invention and the nickel electrode using the nickel hydroxide disclosed in unexamined Japanese Patent Publication No. H2-30061 in alkaline electrolyte of battery, the amount of Zr eluting to alkaline electrolyte is smaller than that of Zn. Therefore, the effect of Zr is maintained over a longer period of time than that of Zn. As a result, the swelling of the nickel electrode of the present invention is restrained over a longer period of time than that of the nickel electrode disclosed in Unexamined Japanese Patent Publication No. H2-30061.

In the nickel hydroxide of the present invention, the content of Zr acting in such a manner is set in the range of 0.1 to 10 wt%.

When the content of Zr is lower than 0.1 wt%, the aforementioned effect for restraining the swelling is not achieved sufficiently. When the content is higher than 10 wt%, the ratio of nickel hydroxide contributing to the charge/discharge characteristics to nickel hydroxide which is an active material decreases, resulting in the decrease in discharge capacity per unit weight of active material. The preferable content is 0.5 to 7.0 wt%.

Next, a preparing method for nickel hydroxide of the present invention will be described.

First, nickel salt, zirconium salt, and alkali are provided for the preparation of nickel hydroxide. As nickel salt, nickel acetate tetrahydrate ($Ni(CH_3COO)_2 \cdot 4H_2O$), nickel sulfate hexahydrate ($NiSO_4 \cdot 6H_2O$), nickel sulfate anhydrate ($NiSO_4$), nickel nitrate hexahydrate ($Ni(NO_3)_2 \cdot 6H_2O$), nickel chloride hexahydrate ($NiCl_2 \cdot 6H_2O$), nickel chloride anhydrate ($NiCl_2$), and the like are used. As zirconium salt, zirconium nitrate dihydrate ($ZrO(NO_3)_2 \cdot 2H_2O$), zirconium chloride ($ZrCl_4$), zirconium nitrate pentahydrate ($Zr(NO_3)_4 \cdot 5H_2O$), zirconium nitrate tetrahydrate ($Zr(SO_4)_2 \cdot 4H_2O$) and other water-soluble zirconium salts are used. These nickel salts and zirconium salts may be used singly, or two or more kinds of them may be used in appropriate combination.

Alkali is not limited specially; for example, potassium hydroxide (KOH), sodium hydroxide (NaOH), and lithium hydroxide ($LiOH \cdot H_2O$) are used. These may be used singly or in a mixed manner.

According to the present invention, the intended nickel hydroxide is prepared by the methods described below.

A first preparing method is to carry out reaction with materials being in the state of aqueous solution. For example, aqueous solution of nickel salt of a predetermined concentration is prepared by dissolving nickel salt in water. To this aqueous solution is added water-soluble amine such as ethylamine, ammonia, methylamine, butylamine, propylamine, and other ammonium salts to yield stable nickel-amine complex, and then zirconium salt of a predetermined amount is dissolved in this solution. Afterward, alkali of a predetermined amount is put into and dissolved in the solution while the whole solution is kept slightly alkaline, and then the whole solution is stirred. As a result, the nickel hydroxide of the present invention is formed and precipitates in the reaction solution with ion of Zr being taken in the ion lattice of nickel hydroxide.

The dissolved amount of zirconium salt is controlled so as to provide the ratio of 0.01 to 0.14 mol zirconium salt to one mol nickel salt. As a result, the nickel hydroxide of the present invention containing 1 to 10 wt% of zirconium can be obtained. The amount of alkali used is not limited specially.

The resultant precipitate is filtered and cleaned with water, by which unnecessary alkaline salt such as sodium sulfate and sodium nitrate, which is produced as a by-product in the process of the aforementioned reaction, is removed. After that, the precipitate is dried, and then ground to be granulated into a predetermined grain size, if necessary.

A second preparing method is to allow the materials to react in a solid state such as small lump, granule, flake, or powder form.

In this case, the aforementioned materials of a predetermined amount are put into a reaction vessel having a stirrer, stirred and mixed to accelerate reaction. The mixing can be performed at room temperature; the conditions such as temperature and pressure need not be controlled.

When these materials are mixed, unlike the case where aqueous solutions of the materials are mixed, the chemical reaction of nickel salt, zirconium salt, and alkali proceeds, especially without the dissolution of alkali, the materials changing into nickel hydroxide containing Zr. The nickel hydroxide obtained by this method has high filtering and cleaning properties, so that it has a very high settling velocity when it is put into water.

In this reaction process, water may be present in the reaction system in some cases. When the reaction takes place in the presence of water, the amount of water in the reaction system, including the water of crystallization of nickel salt and zirconium salt used, should preferably be controlled so that the amount of water is not larger than 20 times of the total mols of nickel salt and zirconium salt as a whole.

This is because, if the amount of water in the reaction system is larger than 20 times of the total mols of nickel salt and zirconium salt, the resultant nickel hydroxide becomes in a gel state like the case of the reaction of aqueous water, so that the filtering and cleaning properties deteriorate.

After the reaction is finished, the content of the reaction vessel is put into a large amount of water and dispersed. Then, the fluid dispersion is filtered to separate nickel hydroxide, which is further rinsed.

In this process, unreacted nickel salt and alkali and further unnecessary salt, which is produced as a by-product during the reaction, are dissolved in water and removed from nickel hydroxide, After rinsing, the nickel hydroxide is dried and ground as necessary to be granulated into a predetermined grain size.

The nickel electrode of the present invention, which supports the nickel hydroxide prepared as described above as an active material, is manufactured by the ordinary method described below.

For example, a powder of nickel hydroxide prepared as described above, a conductive material such as nickel powder, carbon powder, or cobalt oxide powder, and a binding powder such as polytetrafluoroethylene powder are mixed in predetermined ratios, and then ground. A given amount of a thickener such as carboxymethylcellulose and ethylalcohol or water are added to the resultant powder mixture to prepare active material paste.

Next, a current collector with high porosity, e.g. nickel sponge, is filled with the active material paste, and then dried and formed under pressure so that an active material ($Ni(OH)_2$) is supported by the current collector. Thus, the nickel electrode is manufactured.

The incorporation of this nickel electrode as a positive electrode provides an alkaline secondary battery in which the swell and/or deformation of the positive electrode do not occur during the charge/discharge operation, and the decrease in discharge capacity is restrained.

<u>Embodiments 1 to 7 & Comparative Examples 1 to 5</u>

At room temperature, nickel sulfate hexahydrate of 0.5 mol was dissolved in water to prepare aqueous solution of nickel sulfate, to which ethylamine of 1.0 mol was added to yield a total of 500 ml of solution containing amine complex.

Next, zirconium nitrate dihydrate was added to this solution and dissolved in the solution. The whole resultant solution was stirred while the pH value was kept at 10.5. Sodium hydroxide was gradually dissolved in the stirred solution to accelerate reaction. Thus, the precipitate of nickel hydroxide was obtained.

By changing the adding amount of zirconium nitrate dihydrate, nickel hydroxide having Zr content given in Table 1 was obtained.

After the reaction is finished, the whole precipitate was put into a large amount (1000 ml) of water. After putting the precipitate into water, the time taken for the precipitate to completely separate from water was measured. The measured time is given in Table 1.

The precipitate was filtered and rinsed, and then dried sufficiently at 70°C. Then, 3 g of powder was weighed, and a measuring cylinder is loosely filled with the weighed powder. Tapping of 500 cycles was performed to measure the tap density. The measurement result is also given in Table 1.

Each powder (active material), nickel powder (conductive material), cobalt oxide powder (conductive material), and polytetrafluoroethylene powder (binder) were mixed in the ratios of 40 : 50 : 7 : 3 by weight to form a sheet. This sheet was ground again with a coffee mill. Ethylalcohol was added to the powder and stirred to prepare active material paste.

After an nickel sponge plate with a porosity of 95% was filled with each active material paste, the paste was dried at a temperature of 80°C and pressed at a pressure of 3000 kg/cm$^2$ into an electrode plate with a diameter of 20 mm and a thickness of 0.3 mm.

The packing amount of nickel hydroxide was converted from the packing amount of the active material paste to calculate the packing density of nickel hydroxide at each electrode plate. The calculation result is also given in Table 1. Each electrode plate and the nickel plate as a counter electrode was set in a 30% water solution of potassium hydroxide. The charge and discharge of 12 cycles were effected with use of a current of 50 milliamperes per one gram of the nickel hydroxide in the active material filling the nickel sponge plate, and the discharge capacity was measured. The discharge termination potential used was + 0.15 volt as compared with a electrode potential of Hg/HgO.

The thickness ($t_0$) of the electrode plate before the start of the charge/discharge operation and the electrode plate thickness (t) after 12 charge/discharge cycles were measured, and the thickness expansion coefficient was calculated according to a formula, $100 \times (t - t_0)/t_0$ (%) . The above results are collectively given in Table 1.

For comparison, for the case where zirconium nitrate dihydrate was not added during the reaction (Comparative Example 2), the case where 3.0 wt% (Comparative Example 3), 5.0 wt% (Comparative Example 4), and 10.0 wt% (Comparative Example 5) of Zn was contained by adding zinc nitrate hexahydrate in place of zirconium nitrate dihydrate, the time taken for precipitate to separate from water and the tap density were measured. Also, for the electrode plate using nickel hydroxide of Comparative Examples 2 to 5, the packing density, discharge capacity, and thickness expansion coefficient of nickel hydroxide were measured. These measurement results are also given in Table 1.

Table 1

| | | Properties of Nickel Hydroxide | | | Properties of Nickel Electrode | | |
|---|---|---|---|---|---|---|---|
| | Zr Content (wt%) | Separation from Water | Tap Density (g/cc) | Packing Density (g/cc) | Discharge Capacity (mAh/g) | Thickness Expansion Coefficient After 12 Cycles (%) | Thickness Expansion Coefficient After 100 Cycles (%) |
| Embodiment 1 | 0.1 | Separate Within 5 Min. | 1.87 | 2.60 | 221 | 62 | 81 |
| Embodiment 2 | 0.5 | Separate Within 5 Min. | 1.88 | 2.61 | 216 | 57 | 70 |
| Embodiment 3 | 1.0 | Separate Within 5 Min. | 1.88 | 2.61 | 211 | 52 | 65 |
| Embodiment 4 | 3.0 | Separate Within 5 Min. | 1.89 | 2.61 | 207 | 48 | 63 |
| Embodiment 5 | 5.0 | Separate Within 5 Min. | 1.90 | 2.62 | 202 | 44 | 59 |
| Embodiment 6 | 7.0 | Separate Within 5 Min. | 1.91 | 2.63 | 19.7 | 44 | 58 |
| Embodiment 7 | 10.0 | Separate Within 5 Min. | 1.93 | 2.64 | 191 | 43 | 58 |
| Comp. Example 1 | 10.5 | Separate Within 5 Min. | 1.93 | 2.64 | 173 | 41 | 58 |
| Comp. Example 2 | — | Separate Within 5 Min. | 1.88 | 2.61 | 220 | 11.6 | 123 |
| Comp. Example 3 | Zn: 3.0 wt% | Separate Within 5 Min. | 1.87 | 2.60 | 196 | 73 | 89 |
| Comp. Example 4 | Zn: 5.0 wt% | Separate Within 5 Min. | 1.87 | 2.59 | 189 | 50 | 83 |
| Comp. Example 5 | Zn: 10.0 wt% | Separate Within 5 Min. | 1.83 | 2.59 | 161 | 44 | 75 |

As seen from the results shown in Table 1, the nickel hydroxide of the present invention has a greater swell restraining effect than the nickel hydroxide containing Zn. Specifically, although the content of Zr is lower than the Zn content in the nickel hydroxide containing Zn, the nickel hydroxide of the present invention has a sufficient swell restraining effect, and maintains the effect for a long period of time. It also has a high discharge capacity per unit weight of active material.

Embodiments 8 to 15

Granular solid nickel sulfate anhydrate was mixed with solid zirconium nitrate dihydrate so that Zr accounted for 3 wt% of Ni. Granular solid potassium hydroxide of an amount enough for the reaction system was put into the mixture, Further, water was added so that the amount of water in the system has a mol proportion shown in Table 2 with respect to the total mols of nickel sulfate anhydrate and zironium nitrate dihydrate, and the mixture was stirred at room temperature for about 30 minutes.

After the reaction was finished, like Embodiments 1 to 7, the whole structure was put into a large amount of water, the time taken for the precipitate to separate from water was measured, and the tap density after drying was also measured.

Further, like Embodiments 1 to 7, a nickel electrode plate was manufactured, and the packing density, discharge capacity, and thickness expansion coefficient of nickel hydroxide were measured. The above results are collectively given in Table 2.

Table 2

| Embodiment | Amount of Water in Reaction System — Proportion (Multiple) to Total Mols of Ni Salt and Zr Salt | Properties of Nickel Hydroxide | | | Properties of Nickel Electrode | | |
|---|---|---|---|---|---|---|---|
| | | Separation from Water | Tap Density (g/cc) | Packing Density (g/cc) | Discharge Capacity (mAh/g) | Thickness Expansion Coefficient After 12 Cycles (%) | Thickness Expansion Coefficient After 100 Cycles (%) |
| Embodiment 8 | 0.06 | Separate Within 5 Min. | 1.79 | 2.56 | 221 | 27 | 49 |
| Embodiment 9 | 3.0 | Separate Within 5 Min. | 1.75 | 2.58 | 229 | 30 | 53 |
| Embodiment 10 | 5.0 | Separate Within 5 Min. | 1.72 | 2.58 | 233 | 29 | 54 |
| Embodiment 11 | 10.0 | Separate Within 5 Min. | 1.68 | 2.53 | 230 | 28 | 52 |
| Embodiment 12 | 15.0 | Separate Within 5 Min. | 1.65 | 2.54 | 231 | 28 | 52 |
| Embodiment 13 | 18.0 | Separate Within 5 Min. | 1.59 | 2.51 | 228 | 28 | 54 |
| Embodiment 14 | 20.0 | Separate in 5 Min. | 1.52 | 2.47 | 225 | 29 | 53 |
| Embodiment 15 | 22.0 | Separate in 120 Min. | 1.46 | 2.24 | 206 | 29 | 53 |

As seen from the results shown in Table 2, the nickel hydroxide prepared by the method carrying out reaction not in a state of aqueous solution, though having a lower tap density than that of Embodiments 1 to 7, offers very high swell restraining effect. It also has a very high discharge capacity per unit weight of active material. Therefore, it is a very useful active material for high capacity battery.

It is seen that when the amount of water in the reaction system has much mols with respect to the total mols of Ni salt and Zr salt, the water separating property is poor.

Embodiment 16

A nickel-hydrogen alkaline secondary battery was manufactured by using the nickel hydroxide of Embodiment 4 (Zr: 3 wt%, prepared by aqueous solution reaction), the nickel hydroxide of Embodiment 11 (Zr: 3 wt%, prepared by solid state reaction in the presence of water of 10 mol proportion), the nickel hydroxide of Comparative Example 2 (no different metal added), and the nickel hydroxide of Comparative Example 3 (Zn: 3 wt%).

(1) Manufacture of positive electrode

Each nickel hydroxide powder, nickel powder (manufactured by INCO, #210), cobalt oxide powder, and carboxymethylcellulose were mixed in the ratios of 89.7 : 5 : 5 : 0.3 by weight, and water was added to the powder mixture to prepare active material paste. Then, an nickel sponge plate with a porosity of 98% was filled with each active material paste, dried at a temperature of 80°C, and pressed under a pressure of 3000 kg/cm$^2$ into a nickel electrode plate with a length of 82 mm, a width of 41.7 mm, and a thickness of 0.58 mm.

(2) Manufacture of negative electrode

Nickel powder (manufactured by INCO, #210) of 12.7 part by weight was added to a powder of 84.6 part by weight, which was prepared by grinding a hydrogen occulusion alloy having a composition of $Zr_{0.9}Ti_{0.1}(V_{0.33}Ni_{0.67})_{2.4}$ and had a grain size of 63 μm. The resultant powder mixture was ground again, and polyvinylidene fluoride (PVDF) of 2.5 part by weight and carboxylmethylcellulose of 0.2 part by weight were added to the resultant powder mixture. The whole structure was mixed, and water was added to the resultant powder mixture to prepare active material paste.

This active material paste was applied to a nickel-plated perforated steel plate, dried, and pressed. Finally, the plate was baked in the atmosphere at 200°C under a pressure of $10^{-2}$ Torr. Further, the plate was rolled into a thickness of 0.370 mm, and cut to a size 103 mm long and 41.7 mm wide.

(3) Manufacture of battery and charge/discharge cycle test

Assuming that the capacity of unit weight of nickel hydroxide had a theoretical value of 289 mAh/g, the positive electrode was provided with a capacity of 1100 mAh, while assuming the capacity of unit weight of the aforementioned hydrogen occulusion alloy had a theoretical value of 310 mAh/g, the negative electrode was provided with a capacity of 1650 mAh. Thus, a nickel-hydrogen alkaline secondary battery of AA size having a positive electrode capacity of 1100 mAh was manufactured.

The obtained batteries of four types were subjected to a charge/discharge cycle test with a current of 0.2C. The test results are shown in FIG. 1.

In the figure, A denotes the test result of battery using the nickel hydroxide of Embodiment 4, B denotes that of battery using the nickel hydroxide of Embodiment 11, C denotes that of battery using the nickel hydroxide of Comparative Example 2, and D denotes that of battery using the nickel hydroxide of Comparative Example 3.

As seen from FIG. 1, the battery using the nickel hydroxide of the present invention has a high capacity, and has an excellent charge/discharge cycle life properties.

**Claims**

1. A nickel hydroxide for a nickel electrode, in which said nickel hydroxide contains 0.1 to 10 percent by weight of zirconium.

2. A preparing method for a nickel hydroxide for a nickel electrode, comprising:
   a step of allowing alkali of an appropriate amount to react with zirconium salt of 0.01 to 0.14 mols for 1 mol of nickel salt, and
   a step of removing unnecessary salt from the resultant reaction product.

3. A preparing method for a nickel hydroxide for a nickel electrode according to claim 2, wherein said nickel salt, said zirconium salt, and said alkali are used as an aqueous solution.

4. A preparing method for a nickel hydroxide for a nickel electrode according to claim 2, wherein said nickel salt, said zirconium salt, and said alkali are used as a solid.

5. A preparing method for a nickel hydroxide for a nickel electrode according to claim 2 or 4, wherein said reaction takes place in the presence of water of 20 times or less of the total mols of said nickel salt and said zirconium salt.

6. A nickel electrode, in which an active material mixture consisting mainly of said nickel hydroxide defined in claim 1 is supported by a porous current collector.

7. An alkaline secondary battery, in which said nickel electrode defined in claim 6 is incorporated.

# F I G. 1

European Patent
Office

**EUROPEAN SEARCH REPORT**

Application Number

EP 95 11 0733

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DATABASE WPI<br>Derwent Publications Ltd., London, GB;<br>AN 76-93193X<br>& JP-A-51 122 737 (MATSUSHITA) | 1-3 | H01M4/52<br>C01G53/00 |
| A | * abstract * | 6,7 | |
| X | DATABASE WPI<br>Derwent Publications Ltd., London, GB;<br>AN 92-257214<br>LEONTEVA 'Separation of Boron from Highly Mineralised Solutions with Ionite containing Hydroxide(s) of Mg, Ni, and Zr'<br>& SU-A-1 674 952<br>* abstract * | 1-3 | |
| A | DATABASE WPI<br>Derwent Publications Ltd., London, GB;<br>AN 91-174943<br>& JP-A-3 106 441 (TAKEDA)<br>* abstract * | 1-3 | |
| A | EP-A-0 544 011 (YUASA)<br>* page 2, line 8 - line 11; claims 1,2 *<br>* page 4, line 5 - line 18 * | 3,6,7 | TECHNICAL FIELDS SEARCHED (Int.Cl.6)<br><br>H01M<br>C01G |
| A | EP-A-0 557 522 (YUASA)<br>* page 4, line 55 - page 5, line 1 * | 4,6,7 | |

The present search report has been drawn up for all claims

| Place of search | Date of completion of the search | Examiner |
|---|---|---|
| THE HAGUE | 25 October 1995 | Andrews, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)